# EUROPEAN PATENT APPLICATION

(11) **EP 0 672 817 A1**
(43) Date of publication of application: **20.09.1995**
(21) Application number: 95301311.7
(22) Date of filing: 27.02.1995
(51) Int. Cl.: E21B 17/042, E21B 47/01, F16L 15/04, F16L 19/02

(54) **Gas impermeable static seal**

(30) Priority: 17.03.1994 US 210860
(71) Applicant: HALLIBURTON COMPANY, Dallas, Texas 75381-9052 (US)
(72) Inventor: Zeller, Vincent P., Flower Mound, Texas 75028 (US)
(74) Representative: Wain, Christopher Paul

(57) **Abstract**

A static gas-tight seal between cylindrical components has a seal element (45) constructed from gas-impermeable material, arranged to be compressed into sealing engagement with inner (10) and outer (15) mandrels. The compression of the seal element (45) is accomplished through the use of a threaded connection (20) that advances opposing shoulders (30,35) inwardly onto the seal assembly. Metal retainer rings (55a,55b) are provided about the seal element (45) for abutting engagement with the shoulders at exterior ends of the seal assembly and for mating engagement with the seal element. Each retainer ring has flarable skirt portions (60) that prevent extrusion of the seal element from between the pair of retainer rings.

## Description

This invention relates to a static seal for use between cylindrical members, and more particularly (but not exclusively) to a gas and liquid impermeable static seal for use in gauge housings of subterranean tool strings.

Many types of seals are used between cylindrical members. Seals are characterized as being dynamic when the cylindrical members move relative to one another during use. When the cylindrical members remain stationary, one to the other during operation, the seals are considered static. There are many examples of both static and dynamic seals. An exemplary seal of the dynamic type may be found in United States patent 4,743,033 to Guess where a bi-directional seal is disclosed. Therein, a seal comprising a non-elastomeric primary seal is backed by a metal central body that acts as a secondary seal. In operation, the combination seal is positioned between an outer cylinder and an internal piston that moves longitudinally within the cylinder. A seal must be maintained as the components move with respect to one another. Each of the two primary seals is responsive to fluid pressure in one direction. The pressure expands the seals into sealing engagement with the cylinder and a metal-to-metal seal is achieved by the secondary seal and the cylinder. Because it is expected that this seal may be utilized in pressures in the order of 15,000 psi and it is high pressure service for which the seal has been designed, it is of little consequence that relatively small amounts of liquid and or gas may pass by the seals before and during initial expansion and engagement of the seals. In many services, however, even this small amount of leakage would not be tolerable in certain services. It is in these services in which fluid leakage is intolerable that the present invention is employed.

We have now devised an improved static seal, such as can be used in subterranean oil and gas wells. It should be appreciated, however, that the benefits-of the invention will be realized in any application in which a gas tight seal is desired between relatively stationary cylindrical members. Because the seal is fully operable upon completion of the assemblage of the cylindrical components, a liquid and gas tight seal will be provided before the component carrying the seal is pressed into use. For example, a static seal of this type is required in gauge housings used to encase sensitive electronics used in oil and gas wells. In a typical configuration, the gauge housing will be a section of closed pipe made up integrally with a tubular work string.

The interior volumes of the housings will remain substantially constant throughout use. There will be small internal volume changes, and therefore pressure changes that result from slight deformations of the housing body when in service. The pressure may also change slightly in response to temperature changes during service. These slight pressure changes, however, will not affect the operation of devices contained and protected therein.

A liquid and gas proof gauge housing is provided because electronic gauges run therein may be affected by pressure changes and caustic fluids, including gases. Therefore, it is necessary that static seals be used to seal the housings so that no amount of fluid or gas will be allowed to migrate inside at any time during operation. If gas were to enter the housing, even if liquid did not, the pressure within the housing would change enough to potentially cause inaccuracies in the performance of the gauges; alternatively, debilitating gaseous agents may enter that disable the gauges.

According to the present invention, there is provided a static seal for use in tubular connections, which seal comprises a gas impermeable seal assembly positioned between a first tubular body and a second tubular body; said first tubular body being connected to said second tubular body for restrainable relative motion therebetween; a containment means formed by the connection of said first tubular body to said second tubular body for receiving said seal assembly; said gas impermeable seal assembly having a first end and a second end for abutting engagement with said containment means; and a compression means for compressing said seal assembly into sealing engagement between said first tubular body and said second tubular body.

One preferred embodiment includes a static seal for use in tubular connections that has a gas impermeable seal assembly positioned between a first tubular body and a second tubular body. The first tubular body is connected to the second tubular body by a connection that can restrain relative motion between the two bodies. There is a containment means formed by the connection of the first tubular body to the second tubular body that provides a receptacle for receiving the seal assembly. The gas impermeable seal assembly has first and second ends, each of which abuttingly engages the containment means. A compression means for compressing the seal assembly into sealing engagement between the first and the second tubular bodies is also included. In one embodiment, the gas impermeable seal assembly is a seal element made of deformable gas impervious material, preferably a thermoplastic such as polytetrafluouroethylene, eg. TEFLON.

In another version of the gas impermeable seal assembly, there is a seal element made of deformable gas impervious plastic having first and second longitudinal ends. There are also retainer rings, one each positioned in abutting engagement with the ends of the seal element for restraining it between the retainer rings. The retainer rings are constructed from metal in the preferred embodiment, which is contemplated to include any alloy, and are configured so that an interior side is shaped for mating engagement with the seal element. Each ring also has flexible skirts that extend away from the rings toward the seal element. The skirts are radially deflectable into forced engagement with the tubular bodies because of their relative thinness. In still another embodiment of the seal assembly, an extrusion ring positioned between at least one of the retainer rings and the seal element is included to prevent extrusion of the seal element about the retainer ring.

The containment means includes a radially extending shoulder on each tubular body for abutting engagement with longitudinal ends of the seal assembly.

Likewise, the compression means has an adjustable connection between the first and second bodies for changing the interior size of an interior compartment of the containment means. Generally, it is changes in the interior longitudinal length of the containment means that accomplishes the compression of the seal assembly. In the preferred embodiment, the adjustable connection is a threaded connection.

In one particular application, the seal assembly is employed in a gas impermeable electronics housing for use in subterranean wells. The electronics housing includes a housing body that has a first housing piece and a second housing piece that are connected together to form the closed housing body. Pressure sensitive electronics may be placed within the housings for use in hostile environments. The housings include a gas impermeable seal assembly positioned between the first and second housing pieces. The housing pieces are connected, one to the other so that relative motion is restrainable therebetween. There is a containment means formed by the connection between the first and the second housing pieces that serves as a receptacle for receiving the seal assembly. The seal assembly has first and second ends that abuttingly engage the interior of the containment means. The compression means compresses the seal assembly into sealing engagement between the first and second housing pieces. In one embodiment, the electronics housing is a gauge housing having substantially constant interior volume and pressure during service. It is anticipated that the volume and pressure may vary slightly due to temperature changes and slight deformations of the housing body as a result of downhole conditions.

In use, the method for providing a static gas impermeable seal between two tubular bodies includes the steps of connecting a first and second tubular body together by an adjustable connection with a gas impermeable seal assembly positioned between the bodies. The connection is then tightened so that the gas impermeable seal is compressed into forced sealing engagement with both of the bodies.

When providing a gas impermeable instrument housing, an environmentally sensitive instrument is initially positioned within the first housing piece. The first housing piece is then connected to a second housing piece by an adjustable connection with a gas impermeable seal assembly positioned in between thereby forming a gas impermeable gauge housing. To fully engage the seal assembly, the connection is tightened so that the gas impermeable seal is compressed into forced sealing engagement with both of the housing pieces. The gas tight seal sustains a substantially constant pressure within the gauge housing by preventing gas and liquid migration into the interior volume. In one application, the gas impermeable gauge housing is then lowered into a subterranean well for service therein As explained above, the hydrostatic pressure within the well may cause the housing to deform slightly resulting in small changes in the interior volume, and therefore the interior pressure of the housing when in service. Since the housing pieces are constructed from metal alloys that resist deformation, the pressure changes within the housing will be relatively small and will not affect the performance of the electronics housed therein.

In order that the invention may be more fully understood, reference is made to the accompanying drawings, wherein:

Figure 1 is a longitudinal half section of an exploded view of the seal assembly in a relaxed state.

Figure 2 is a longitudinal section of an assembled seal assembly.

Figure 3 is a radial cross-sectional view of the seal assembly in an energized state as shown in Figure 2.

Figure 4 is an exaggerated longitudinal half section of a compressed seal assembly.

Figure 5 is a longitudinal half section of an alternative embodiment of the seal assembly in which ramped retainer rings are employed.

Figure 6 is a longitudinal half section of an alternative embodiment of the seal assembly showing a seal element and 90 degree shoulders.

Figure 7 is a longitudinal half section of an alternative embodiment of the seal assembly showing a seal element and angled shoulders.

Figure 8 is a longitudinal half section of an alternative embodiment of the seal assembly showing a seal element, retainer rings and an extrusion ring.

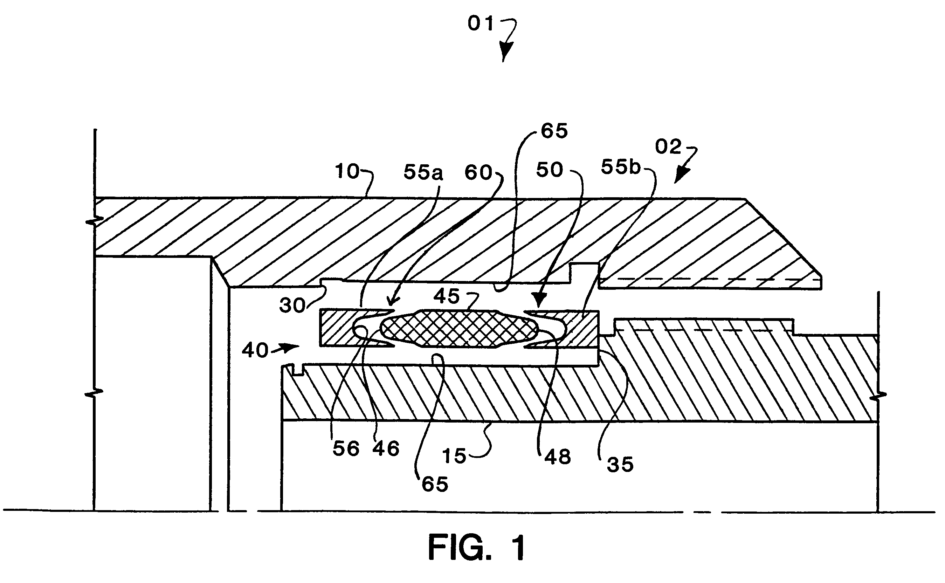

Referring to Figure 1, a static seal 01 is shown as a preferred embodiment of the gas impermeable compression seal assembly 02. It should be appreciated that many tubular components of the compression seal assembly 02 and the housings in which the assembly 02 is employed are cylindrical in shape and concentrically oriented. As a result, many share a common longitudinal center line. In many cases throughout the following description, components will be referred to as having longitudinal lengths and/or widths, as being oriented for relative longitudinal motion, and or otherwise be comparatively described as being longitudinally related. In each instance, it should be understood that longitudinal references relate generally to lines parallel to the longitudinal center line of the seal assembly 02 which is coincident with a longitudinal centerline of a tool string of which the housing is a component.

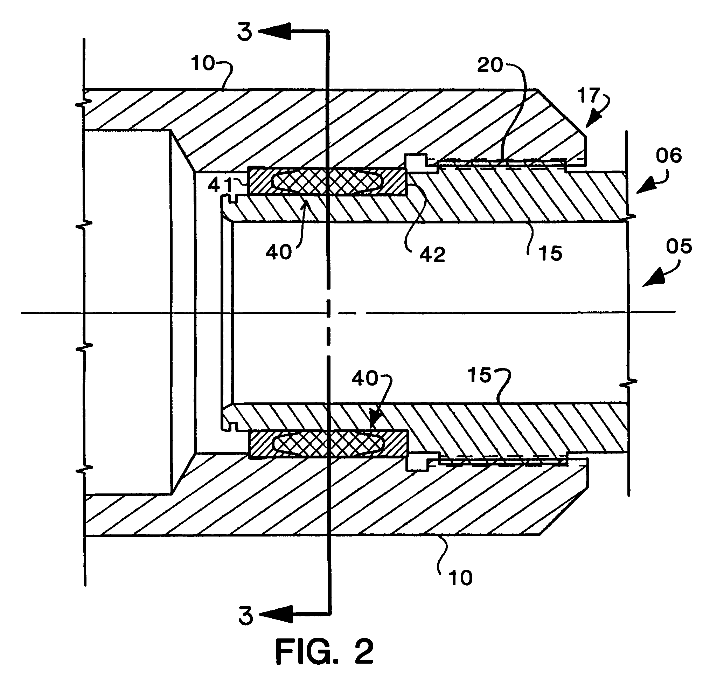

As may be most easily seen in figure 2, the gauge housing 05 comprises a housing body 06. The housing body 06 has as two primary components a first housing piece, also referred to as a first tubular body 10, and a second housing piece, also referred to as a second tubular body 15. In the illustrated case, the first and second tubular bodies 10 and 15 are threaded pipe sections. The outer body 10 has an internally threaded portion while the inner body 15 has an externally threaded portion that threadedly connects, one to the other in an adjustable connection 20. The connection 20 is considered adjustable, specifically longitudinally adjustable, because the further you advance the mating threads of the two bodies 10 and 15, the more the second body 15 is moved into the first body 10.

First shoulder 30 may be found as a radial expansion upon the first tubular body 10. Second shoulder 35 may be found as a radial expansion upon the second tubular body 15. When the bodies 10 and 15 are connected together at the threaded connection 20, the shoulders 30 and 35 oppose one another in a longitudinal sense and provide partial boundaries to a compartment of the compression means 17.

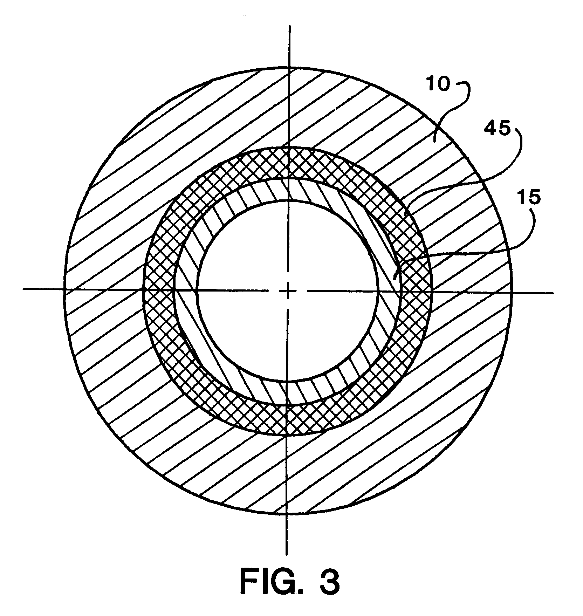

Gas impermeable seal assembly 40 resides within containment means 50 created by the compression means 17. A compartment for the seal assembly 40 is created by the shoulders 30 and 35 at longitudinal ends and a polished interior bore 70 of the first tubular body 10 and a polished exterior mandrel 65 of the second tubular body 15. In a typical configuration as shown in figures 1 through 4, the seal assembly 40 comprises a seal element 45 contained between retainer rings 53. There is a first retainer ring 55a at a first longitudinal end 46 of the seal element 45 and a second retainer ring 55b at a second longitudinal end 48 of the seal element 45. Interior side 56 of the retainer rings 53 is shaped and configured to matingly engage the exterior ends of the seal element 45. Exterior side of the retainer rings 53 provide first 41 and second 42 ends to the seal assembly 40 for abutting engagement with the shoulders 30 and 35. The retainer rings 53 are concave toward the seal element 45. Flexible skirts 60 create the concavity as each pair extends toward the seal element 45.

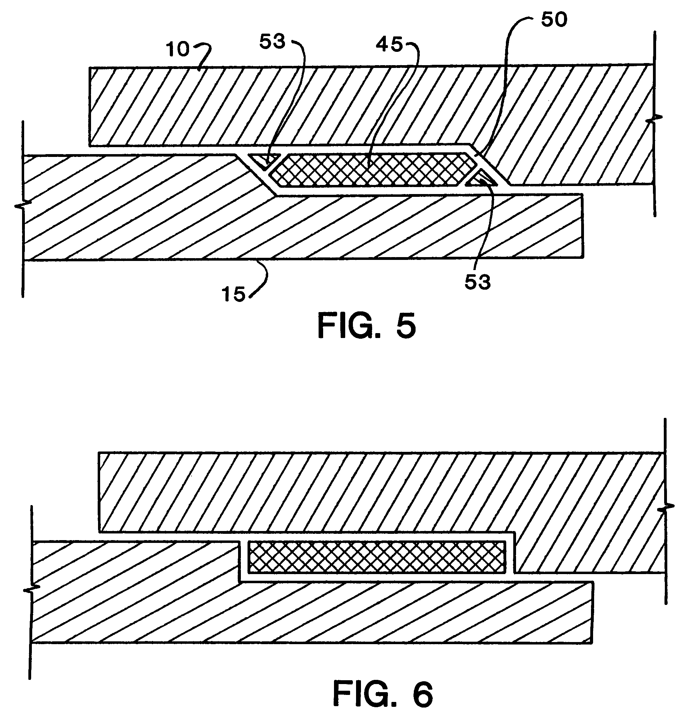

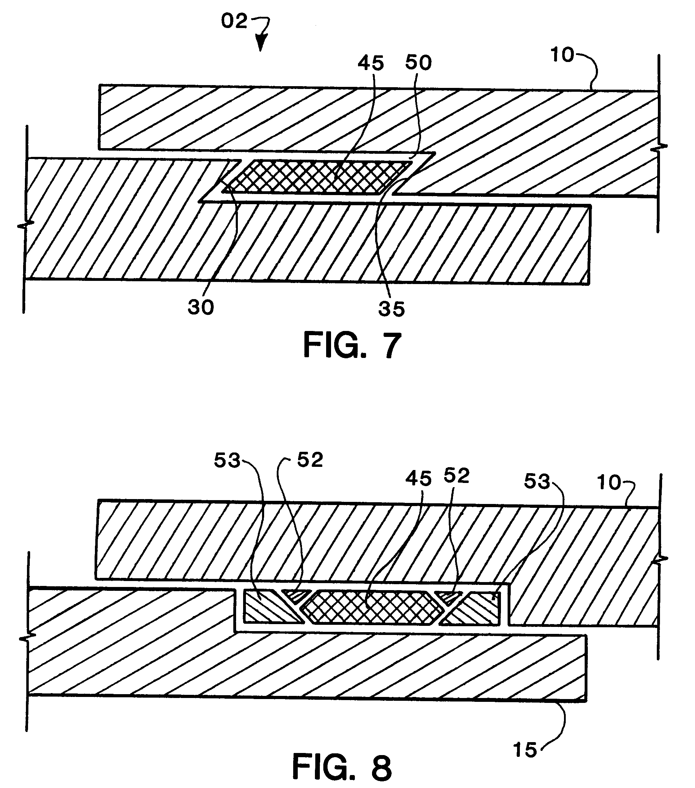

As may be seen in figures 6 and 8, the shoulders may be oriented at 90 degrees from the centerline of the bodies 10 and 15. As may be seen in figures 5 and 7, the shoulders 30 and 35 may be oriented at angles other than 90 degrees from the centerline of the bodies 10 and 15. In the angled configuration of figure 7, the inwardly angled shoulders 30 and 35 that project toward the seal assembly 02 will assist in retaining the assembly 02 within those shoulders 30 and 35. In the alternative embodiments of figures 5 and 8, extrusion rings 52 are provided. In each instance, the retainer rings 53 or the shoulders 30 and 35 have interior surfaces that slant away from the seal element 45 thereby facilitating extrusion of the seal element 45 out of the restraining compartment. The extrusion rings 52 change the angle of the interior surface that abuts the seal element 45 thereby preventing extrusion of the seal element 45. Furthermore, the extrusion rings 52 are made from materials less susceptible to deformation than the seal element 45 and therefore resist the outward forces of the compressed seal element 45.

Assemblage of the compression seal assembly 02 is accomplished by initially placing the rings of the seal assembly 02 onto the polished mandrel 65 of the second body 15. The first retainer ring 55a is installed so that a backside of the ring 55a abuts the second shoulder 35 with the flexible skirts 60 the ring 55a extending away from the shoulder 35. The seal element 45 is then installed so that a leading side of the element 45 matingly engages the first retainer 55a. The second retainer 55b is then installed upon the mandrel 65 so that it matingly engages the seal element 45 from an opposite side to the first retainer 55a.

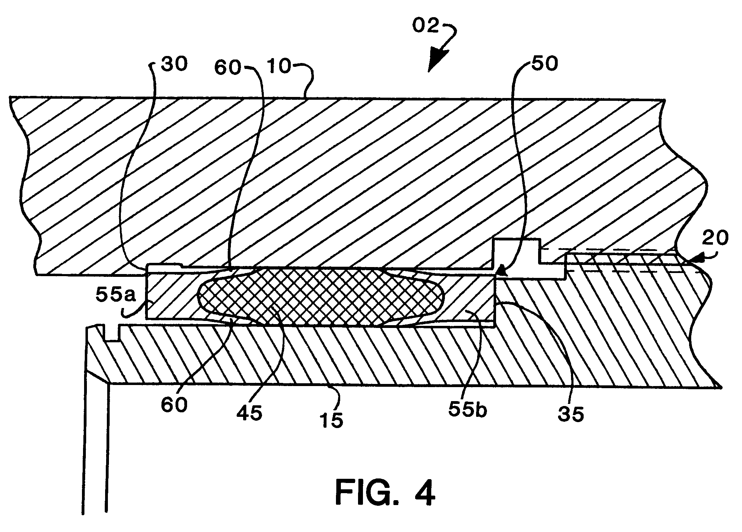

The two tubular bodies 10 and 15 are then connected together at the adjustable threaded connection 20. The mating threads are then advanced, one upon the other, so that the shoulders 30 and 35 move inward, one toward the other. As the threaded connection 20 is further tightened, the squeezing shoulders act as a compression means 17 that presses all of the seal assembly 40 components together. Ultimately, the compression means compresses the seal element into a deformed state in which the seal element is sealably engaged with the polished mandrel 65 of the second body 15 at an inside diameter and the polished bore 70 of the first body 10 at an outside diameter. As may be seen in the exaggerated view of figure 4, the skirt 60 portions of the retainer rings 53 flare outwardly toward the polish bore thereby preventing the seal element 45 from extruding past. At this time, the gas impermeable seal is achieved by the seal element 45 and metal-to-metal seals may be formed between the flared skirts 60 and the tubular bodies 15 and 20. The seal, as well as the stationary orientation of the bodies 10 and 15 is maintained by the threaded connection 20 until disassembly.

In the case of a gauge housing 05 for use in oil and gas wells, an electronic device will be installed into an interior of the tubular bodies 10 and 15. The housing body 06 will then be connected into series with other components of a tool sting. The tool sting, including the protected electronic device within the gauge housing 05, is then lowered down into the well for airtight service therein.

It will be appreciated by those of skill in this particular art that the compression seal assemblies 02 disclosed herein have specific application in downhole tool housings, but may be utilized in any application where a static seal is required and gas and liquid tightness is desired between cylindrically shaped components. Moreover, the foregoing detailed description is to be clearly understood as being given by way of illustration and example only.

## Claims

1. A static seal for use in tubular connections, which seal comprises a gas impermeable seal assembly (02) positioned between a first tubular body (10) and a second tubular body (15); said first tubular body (10) being connected (20) to said second tubular body (15) for restrainable relative motion therebetween; a containment means (50) formed by the connection of said first tubular body (10) to said second tubular body (15) for receiving said seal assembly (02); said gas impermeable seal assembly (02) having a first end (41) and a second end (42) for abutting engagement with said containment means (50); and a compression means (17) for compressing said seal assembly (02) into sealing engagement between said first tubular body (10) and said second tubular body (15).

2. A seal according to claim 1, wherein the gas impermeable seal assembly (02) comprises a seal element (45) made of deformable gas impervious material.

3. A seal according to claim 2, wherein the seal element (45) has first (46) and second (48) longitudinal ends; and retainer rings (55a,55b) are provided, one each positioned in abutting engagement with said first (46) and second (48) longitudinal ends for restraining said seal element (45) between said retainer rings (55a,55b).

4. A seal according to claim 3, wherein said retainer rings (55a,55b) are constructed from metal and are configured at an interior side for mating engagement with said seal element; said retainer rings (55a,55b) comprising flexible skirts (60) that extend from said rings toward said seal element (45), said skirts being radially deflectable into forced engagement with said tubular bodies (10,15).

5. A seal according to claim 4, wherein the gas impermeable seal assembly (02) further comprises an extrusion ring (52) positioned between at least one retainer ring (55a, 55b) and said seal element (45) for preventing extrusion of said seal element about said retainer ring.

6. A seal according to any preceding claim, wherein the gas impervious material is thermoplastic material.

7. A seal according to claim 6, wherein the gas impervious material is polytetrafluoroethylene.

8. A seal according to any of claims 1 to 7, wherein said containment means (50) comprises a radially extending shoulder (30,35) on each tubular body (10,15) for abutting engagement with longitudinal ends (46,48) of said seal assembly.

9. A seal according to any preceding claim, wherein said compression means (17) comprises an adjustable connection (20) between said first (10) and second (15) bodies for changing the interior size of said containment means (50).

10. A seal according to claim 9, wherein said adjustable connection (20) between said first (10) and second (15) bodies changes an interior longitudinal length of said containment means (50).
